# EUROPEAN PATENT APPLICATION

(11) **EP 3 372 468 A1**
(43) Date of publication of application: **12.09.2018**
(21) Application number: 17160285.7
(22) Date of filing: 10.03.2017
(51) Int. Cl.: B61D 3/18, B61D 47/00, B60P 3/06

(54) **SYSTEMS AND METHODS FOR LOADING AND UNLOADING VEHICLES IN TRANSPORT PLATFORMS**

(71) Applicant: AUTOMATITZACIO DE PROCESSOS I MEDIAMBIENT, S.L., 08830 Sant Boi de Llobregat (ES)
(72) Inventor: Matutano Pla, Joan, 08820 EL PRAT DE LLOBREGAT (ES); Padrós Cirera, Pere, 08530 LA GARRIGA (ES); Domínguez Vázquez, Emilio, 08013 BARCELONA (ES); Villalonga Pardo, David, 08459 SANT ANTONI DE VILAMAJOR (ES); Rincón Legarre, Oscar, 08860 CASTELLDEFELS (ES)
(74) Representative: ZBM Patents - Zea, Barlocci & Markvardsen

(57) **Abstract**

A vehicle (C) coming from a car factory is advanced on a transport conveyor until placed on a driving platform where the vehicle (C) is driven into a transport platform (10) of a railway train wagon until the front wheels (F) of the vehicle (C) are removably clamped, raised and translated by a first pair of driving carriages (TA, TB) until the rear wheels (R) of the vehicle (C) are clamped by a second pair of driving carriages (TA, TB), the vehicle (C) being then advanced by the first and second pairs of driving carriages (TA, TB) along the transport platform (10) to a desired loading position.

## Description

The present disclosure relates to automation technologies to optimize logistics processes such as transport of vehicles, and specifically to systems and methods for loading and unloading vehicles in transport platforms, such as for example in railway, ship, truck transport, etc.

### BACKGROUND

Transport of cars, and motor vehicles in general, such as from where the manufacturer is located to distribution centres, have been carried out in group transports, such as by railway transport, through railway trains having one, two or more levels where vehicles are placed.

For example, a car factory in Barcelona (Spain) can produce 2000 vehicles a day, 500 of which are shipped to the seaport by railway transport through 450-meter-long standard cargo trains with a loading capacity of 170 vehicles that are usually full loaded with vehicles. A complete cycle may take about 7 hours (2.0-2.5 hours for vehicle loading, 1 hour for train outward journey, 2-2.5 hours for vehicle unloading, and 1 hour for train return journey). According to that cycle time, maximum frequencies of trains can not be increased beyond 3 trains per day.

A cycle time reduction would be desirable in order to improve efficiency of transport of vehicles. In the above example, a 1-1.15-hour reduction for loading and unloading vehicles in the standard cargo trains would advantageously allow an increase of 3-6 trains a day. This would represent an increase of approximately 500 cars (900-1000 per day) that can be transported.

Attempts have been made to increase the efficiency of vehicle transport. For example, EP0583633 provides a device for loading motor vehicles from a conveyor into a railway train. The conveyor is provided with pallets that can roll thereon. The vehicles are arranged on the pallets such that pallets with a vehicle roll on the conveyor to a wagon. The device comprises least one transfer carriage that can receive at least one pallet from the conveying apparatus by transverse displacement. The transfer carriage can be docked against a carriage of the train and transfer the pallet with a vehicle to the same by transverse displacement.

Although a higher number of vehicles can be loaded to and unloaded from railway trains using said technology in an efficient manner, it is however complex and costly since special wagons are required for side loading since the transfer carriages are arranged for receiving pallets from the conveying apparatus by transverse displacement.

A need therefore still exists for an efficient and cost effective system for loading and unloading vehicles in a transport platform, such as railway, ship or truck transport, etc.

### SUMMARY

The object of the present system and method for loading and unloading vehicles in transport platforms is thus to reduce the cycle time in order to increase the frequency of the means of transportation, such as for example, the frequency of railway trains for transporting vehicles.

The system and method for loading and unloading vehicles in transport platforms that it will be described below can be efficiently applied to railway transport, although other means of transport can be used such as transport by ship, by truck, etc. On the other hand, the present system and method can be efficiently applied for loading and unloading any types of vehicles, such as cars, tractors, vans, minivans, trucks, motorcycles, station wagons, pickup trucks, and wheeled vehicles and containers in general, and the like. Other applications are also envisaged such as automated and semi-automated parking lots in urban areas, shopping centres, airports, railway stations, and also in wash tunnels, cargo ships, inside vehicle factories, and even for loading and unloading.

The present system comprises at least one transport platform. Such transport platform may be part, for example, of a railway train wagon, intended to receive vehicles thereon. The present system further comprises at least one pair of driving carriages. In a preferred example, the system would include at least two pairs of driving carriages associated with a transport platform in a railway train wagon. However, a different number of pairs of driving carriages and other applications, as stated above, are not ruled out.

The driving carriages are displaceably mounted in the transport platform to arrange the vehicles therealong. It is preferred that the driving carriages can be displaced in a guided manner along the transport platform.

Each pair of driving carriages comprises two respective driving carriages that are arranged opposite each other in the transport platform, such as at the longitudinal sides of the transport platform. The driving carriages in each pair are associated with the wheels of at least one vehicle axle. For example, in a two-axle vehicle, a first pair of driving carriages may be provided associated with the front wheels of the vehicle and a second pair of driving carriages may be provided associated with the rear wheels of the vehicle. Although it could be not necessary, the present system preferably comprises as many pairs of driving carriages as vehicle axles. The system may include as many interchangeable pairs of driving carriages and transport platforms as required according to transport requirements. The present system may be made of a modular structure with interchangeable parts that can be applied to already existing installations.

From the above it follows that, in use, the present system contacts a vehicle through its wheels.

Each driving carriage is provided with clamping mechanisms adapted to removably clamp a vehicle wheel and driving means for moving along the transport platform so as to displace the vehicle to a desired position therealong. It is preferred that the driving carriages are moved in a guided manner along the transport platform.

The driving carriages may be also adapted to raise and lower the wheels of the vehicle relative to the transport platform to allow the vehicle, with its wheels clamped by the clamping mechanisms, to be displaced along the transport platform. Raising and lowering of vehicles may be done through different ways. Said operations may be carried out, for example, by operating the two clamping mechanisms causing them to move towards each other until they become under the wheel of the vehicle. As a further example, raising and lowering of the wheels of the vehicle may be carried out by operating the clamping mechanisms causing them to move upwards or downwards, and thus the wheel, as required.

Once the vehicle has been raised a given height from the transport platform, the driving carriages can be then also driven for displacing the vehicle along the transport platform into a desired position.

The clamping mechanisms may comprise pairs of moving arms adapted to removably clamp the vehicle wheels. Said pairs of moving arms are configured to removably clamp a vehicle wheel therebetween. For this purpose, the arms may be adapted for example to open and close to each other on a horizontal plane. That is, the arms in each pair of arms can be moved towards each other in order to clamp a vehicle wheel therebetween and away from each other in order to release the vehicle wheel therefrom, or for allowing the wheel to be arranged between the arms so as to be then clamped accordingly.

Rollers may be provided in the arms of the clamping mechanisms. Such rollers are configured so that they can be freely rotated around its longitudinal axis such that the vehicle wheel can roll thereon with low friction in order to facilitate placing the corresponding vehicle wheel.

The driving carriages are configured such that the moving arms in different driving carriages do not interfere with each other when driven for moving towards each other to clamp a vehicle wheel therebetween or away from each other to release the vehicle wheel therefrom or to allow the wheel to be arranged between the arms so as to be then clamped accordingly. Particularly, the driving carriages are arranged at different heights to each other such that moving arms of different driving carriages are prevented from interfering with each other, especially when they move away from each other. In other words, when arms in different driving carriages move away from each other, one arm of a driving carriage is placed above or below another arm of a different driving carriage. Alternatively, the arms may be configured comprising at least to arm segments hinged to each other. Thus, when the arms move away from each other, the total effective length is shorter that the length of a single segment arm as a result of which arms of different driving carriages are prevented from interfering with each other, especially when they move away from each other.

At least one driving platform may be also provided if required. The driving platform includes a conveyor surface that is adapted for receiving a vehicle thereon. The conveyor surface of the driving platform is adapted to be driven so as to advance the vehicle into the transport platform, or away therefrom, depending on the operation being performed. It may be preferred that the driving platform is also configured to be driven upwards and downwards for raising and lowering the vehicle placed thereon in order to reach the plane of the corresponding transport platform. The present system is thus capable of loading and unloading vehicles in transport platforms arranged at different levels or heights, such as for example in multi-level railway train wagons. It may be also preferred that the driving platform is configured to be rotated around a vertical axis so as to direct the vehicle placed thereon properly as required.

The present system may further include at least one transfer platform. Such transfer platform has rollers, preferably free rotating rollers, to facilitate rolling of the vehicle wheels thereon with low friction. In preferred examples, the transfer platforms are intended to be arranged in coincidence with at least one driving platform. The transfer platforms may be arranged between driving platforms and/or between a transport platform and a driving platform. The purpose of the transfer platform is to operate as a bridging element for advancing the vehicle thereon between the transport platform and the driving platform and/or between two adjacent transport platforms suitably as described.

A method for loading and unloading vehicles in transport platforms is now described in connection with the system described above. The present method comprises placing a vehicle into a transport platform in the system described above. Said vehicle may be for example a car coming from a car factory that is being carried by a conveyor. The transport platform may be, or may be part of, for example a railway train wagon. However, other examples of transport platforms are also possible.

The vehicle is then advanced on the transport platform until the wheels of a first axle thereof, e.g. the front axle, are positioned in correspondence with a first pair of the above described driving carriages of the system described above.

The clamping mechanisms of the first pair of driving carriages are driven such that the wheels of the first axle of the vehicle are clamped properly. The driving carriages of the first pair are driven for raising said wheels of the first axle of the vehicle a suitable height from the transport platform. Once the wheels of the first axle of the vehicle are raised at a suitable height, the driving carriages are driven to be displaced along the transport platform. After a given distance has been travelled, that may be when the wheels of a second vehicle axle, e.g. the rear axle, are in correspondence with a second pair of driving carriages of the system, the driving carriages are stopped. The clamping mechanisms of the second pair of driving carriages are driven to clamp the wheels of the second axle of the vehicle. The clamping mechanisms of the second pair of driving carriages are then driven such that the wheels of the second axle of the vehicle are clamped properly. The driving carriages of the second pair are driven for raising said wheels of the second axle of the vehicle a suitable height from the transport platform that may correspond to the height at which the wheels of the first vehicle axle are raised.

In that situation, at least one of the first or the second pair of driving carriages is driven for displacing the vehicle, preferably in a guided manner, into a desired position along the transport platform.

The step of driving the carriages for displacing them, and thus the vehicles, along the transport platform may be controlled through suitable sensor means. For example, the distance that the first pair of driving carriages should be driven relative to the second pair of driving carriages may be controlled through sensor means. Said sensor means may be fitted in any suitable location in the vehicle. The sensor means may for example comprise a RFID card that may be capable of allowing the first pair of driving carriages to be driven relative to the second pair of driving carriages a distance substantially equivalent to the distance between vehicle axles.

The method may further comprise driving the driving carriages again into a position for receiving the wheels of another vehicle to be loaded in the transport platform of unloaded therefrom. Other steps for driving carriages into a position for receiving the vehicle wheels may be carried out for example for advancing vehicles between transport platforms.

The present method may further comprise providing a driving platform arranged substantially at the same level as the transport platform. Said driving platform includes a conveyor surface that is adapted for receiving a vehicle thereon. According to the present method, the conveyor surface is operated so as to be advanced into or out of the transport platform according to the operation being performed.

For advancing the vehicle along the transport platform, the method may comprise providing at least one transfer platform arranged between the transport platform and the above mentioned driving platform and/or between transport platforms. Thus, the transfer platform may operate as a bridge for advancing the vehicle thereon between the transport platform and the driving platform and/or between two adjacent transport platforms. This allows vehicles to be passed between two adjacent railway train wagons.

Through the use of the systems and methods disclosed herein, loading and unloading operations of vehicles such as cars, tractors, vans, minivans, trucks, motorcycles, station wagons, pickup trucks, wheeled containers, etc. are highly improved in terms of reduction of cycle times. As a result, a significant increase of frequency of trains can be achieved through a very simple and cost effective system.

When applying the above described system and method in the above example of a car factory, the cycle time for carrying out a loading or unloading operation of vehicles in a railway train wagon is of the order of 80 minutes. This advantageously involves an increase of loading and unloading speeds of almost more than 50% as compared with current systems and methods which usually take of the order of 150 minutes for performing the same operation. The frequency of trains can be thus increased from 3 to 5 trains in the above example resulting in an increase of 77880 vehicles per year that can be shipped to the seaport. As a consequence, the use of alternative means of transport such as trucks are significantly reduced so transport efficiency is thus increased and costs are reduced. In the case of transport by railway train, for example, minimal changes are required to be made on the wagons. On the other hand, operation of the system may be performed in a fully or semi-automated manner with no or little supervision. Furthermore, although different power supplies may be used to operate the system disclosed herein, an electrically operated system is preferred. In case of failure, the system can be immediately stopped and allowed to be manually driven or otherwise operated in the traditional way. No bottlenecks therefore produced in the loading and unloading operations even in case of failure.

Additional objects, advantages and features of examples of the present system and method for loading and unloading vehicles in transport platforms will become apparent to those skilled in the art upon examination of the description, or may be learned by practice thereof.

### BRIEF DESCRIPTION OF THE DRAWINGS

Particular embodiments of the present system and method for loading and unloading vehicles in transport platforms will be described in the following by way of a non-limiting example. The present example is given with reference to the appended drawings.

In the drawings:
Figure 1 is a fragmentary perspective view of a first segment of a transport conveyor for conveying cars from a car factory and a second segment of transport conveyor for conveying the cars into a transport platform of a railway train wagon, and a driving platform connecting said first and second segments of the transport conveyor;
Figure 2 and figure 3 are detailed fragmentary perspective views of part of the transport conveyor with driving carriages arranged thereon as part of the present system for loading and unloading cars, with said driving carriages being shown with their clamping mechanisms in one releasing condition in figure 2 and with their clamping mechanisms in one clamping condition in figure 3;
Figure 4 is an enlarged detailed perspective view of one example of a driving carriage; and
Figure 5 is a perspective view showing internal parts of the driving carriage illustrated in figure 4.

### DETAILED DESCRIPTION OF EXAMPLES

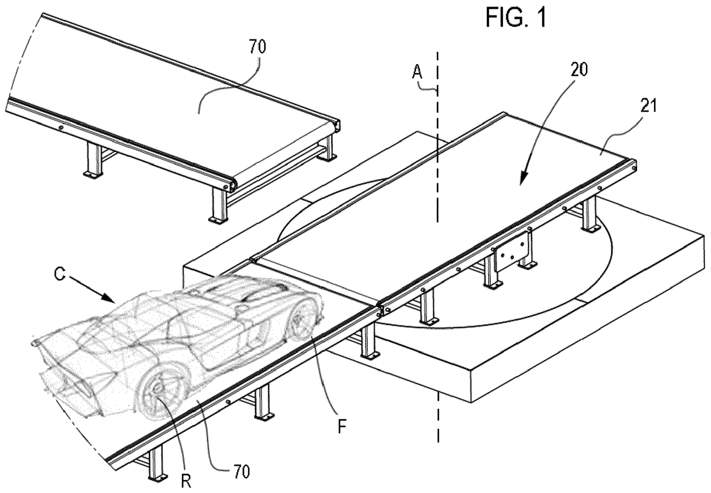

One example of the present system for loading and unloading vehicles in transport platforms will now be described with reference to figures 1-5 of the drawings. In the example, the system 100 is applied for loading and unloading cars C in a transport platform 10 of a railway train wagon. Other applications are of course possible such as transportation by ship, by truck, etc. and for transporting vehicles other than cars C such as tractors, vans, minivans, trucks, motorcycles, station wagons, pickup trucks, wheeled containers and wheeled vehicles in general, etc.

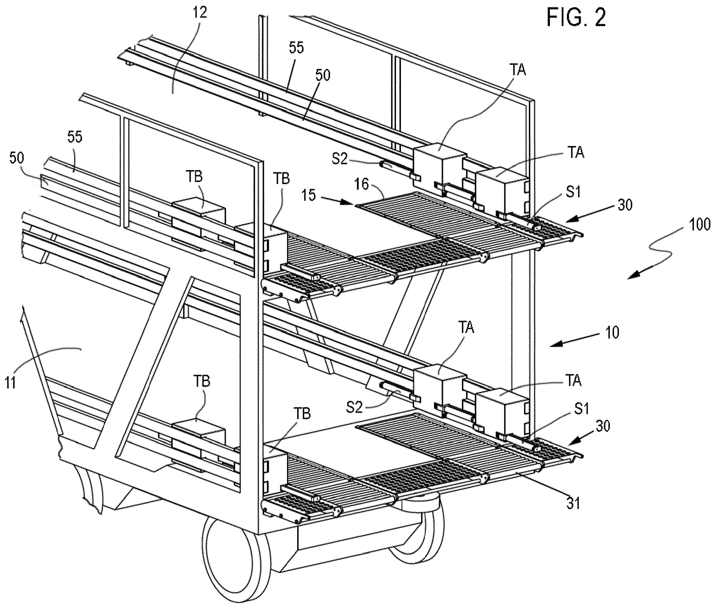

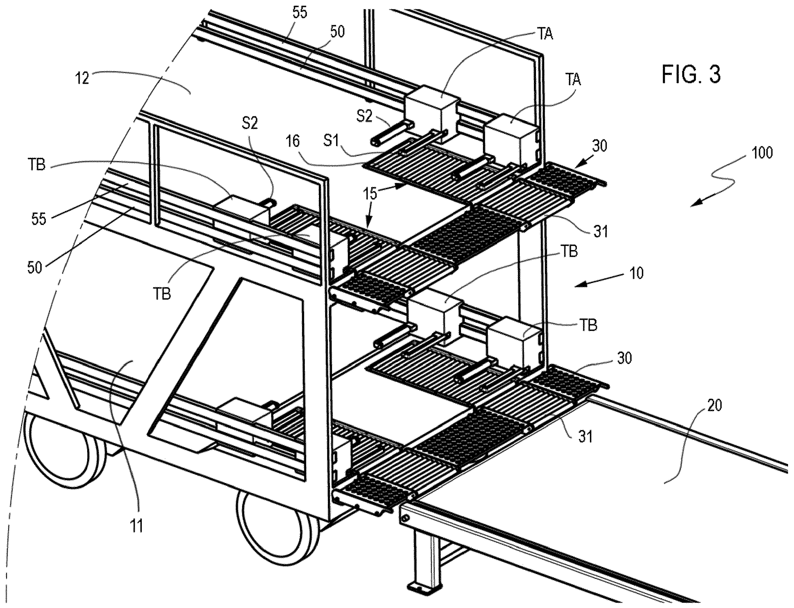

Referring to figures 2 and 3 of the drawings, the system 100 comprises a two-level transport platform 10. The lower level 11 and the upper level 12 of the transport platform 10 are both intended to receive a number of cars C in an aligned arrangement. However, transport platforms 10 with a different number of levels can be also used, and in general any transport platforms 10 as long as they are suitable for loading and unloading cars C.

In the specific non-limiting example described herein, the two-level transport platform 10 is part of a railway train wagon. Each level 11, 12 of the transport platform 10 is provided with two opposite lateral areas 15 where free rotating horizontal rollers 16 are arranged. The free rotating horizontal rollers 16 are adapted for receiving thereon the wheels F, R of the front axle and the rear axle of a car C, respectively, with low friction. Said areas 15 with rollers 16 in the transport platform 10 are located in correspondence with pairs of driving carriages TA, TB that are described below in connection with figures 2 and 3 of the drawings.

The above mentioned pairs of driving carriages TA, TB are mounted on each of the levels 11, 12 of the transport platform 10. Said driving carriages TA, TB are mounted such that they can be displaced in a guided manner along upper and lower guides 50, 55 are arranged at opposite sides of the transport platform 10.

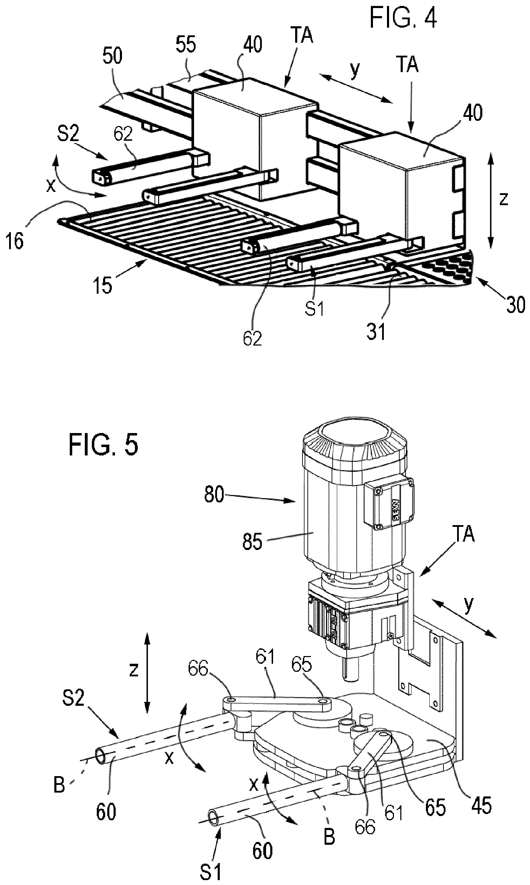

Now referring more particularly to figure 4 of the drawings, each pair of driving carriages TA, TB comprises two opposite driving carriages TA, TB to be associated with one respective wheel F; R, of an axle of the car C. In the example, a first pair of driving carriages TA, TB is to be associated with the front wheels F of the car C while a second pair of driving carriages TA, TB is to be associated with the rear wheels R of the car C. It follows from the above that the car C is contacted by the system 100 only through its wheels F, R.

As illustrated in detail in said figure 4, each driving carriage TA, TB comprises a housing 40 inside of which motor means 80 are accommodated. The housing 40 is releasably coupled to a base 45 of the driving carriage TA, TB as shown in figure 5 of the drawings. Figure 5 illustrates a driving carriage TA devoid of the housing 40 in order to show internal parts thereof. The motor means 80 in this specific example include a vertical axis electric motor 85 and a transmission, not shown, configured to drive the driving carriage TA, TB as it will be described further below.

The driving carriages TA, TB each include a clamping mechanism for clamping a wheel F; R of the car C. Each clamping mechanism comprises a pair of moving bars or arms S1, S2. In the specific non-limiting example shown in the figures 1-5 of the drawings, and particularly in figure 5, each bar or arm S1, S2 is formed of an arm clamping portion 60 and an arm folding portion 61. First and second pivot points 65, 66 are provided. The arm folding portion 61 is pivotally attached to the base 45 of the driving carriage TA, TB through said first pivot point 65 while the arm clamping portion 60 and the arm folding portion 61 are hinged to each other through said second pivot point 66.

The arms S1, S2 of the clamping mechanisms are driven by the electric motor 85 through the transmission, not shown. In use, the arm folding portion 61 is driven by the electric motor 85, through said transmission, to rotate around the first pivot point 65. This causes the arm clamping portion 60 to be driven as it is a connecting rod around the second pivot point 66. As a result, the arm clamping portion 60 and the arm folding portion 61 are caused to move angularly in a substantially horizontal plane towards each other as indicated by arrow X in the drawings for clamping or releasing a wheel F; R of the car C, or merely to allow the wheel of the car to be arranged between the arms so as to be then clamped accordingly. Figure 2 shows the arms S1, S2 of the driving carriages TA, TB arranged fully opened in a releasing condition, that is arranged at an angle of about 180° to each other, and figure 3 shows the arms S1, S2 of the driving carriages TA, TB in a clamping condition, that is arranged substantially parallel with each other.

As shown in figure 4, a roller 62 is provided in the arm clamping portion 60 such it can be freely rotated around the respective longitudinal axes B of the arm clamping portions 60 when the wheels F; R of the car C are placed thereon. The rollers 60 allow the arms S1, S2 to be moved towards each other clamping a wheel F; R of the car C between them until the wheel F; R is placed properly onto the roller 62 of each arm S1, S2 resulting in the wheel F, R being raised a given distance from the transport platform 10 as indicated by arrow Z.

With the wheels F; R of the car C placed onto the rollers 62 of the respective clamping portions 60 of the arms S1, S2 and thus raised from the transport platform 10, the driving carriages TA, TB can be then driven so as to be displaced along direction Y in the transport platform 10 through guides 50, 55 described above. This may be carried out through the electric motor 85 of the motor means 80 described above or through separate motor means.

In the example shown, a driving platform 20 is provided as illustrated in figures 1-3 of the drawings. The driving platform 20 is adapted to be arranged in the gap between the transport conveyor 70 coming from a car factory and the transport platform 10 of the railway train. The driving platform 20 in this specific example has a conveyor surface 21. Such conveyor surface 21 is adapted for receiving a car C thereon and causing it to advance towards or away therefrom for loading and unloading cars C in the transport platform 10. Driving of the conveyor surface 21 is synchronous with driving of carriages TA, TB along direction Y as described above.

The driving platform 20 can be also driven to move upwards and/or downwards. This allows the conveyor surface 21 to be raised or lowered in the direction Z of the drawings such that the car C placed thereon can be properly positioned according to the corresponding level 11, 12 of the transport platform 10 in the railway train wagon for loading or unloading the car C.

In this example, the driving platform 20 can be also driven to be rotated around a vertical axis A as shown in figure 1. A car C can be thus directed properly to transport platforms 10 that are arranged at an angle relative to a corresponding transport conveyor 70 from the car factory.

One or more transfer platforms 30 are also provided in this example. Transfer platforms 30 are suitable for acting as a bridge element between adjacent transport platforms 10 and between a transport platform 10 and a driving platform 20. The transfer platforms 30 of the system 100 are illustrated in figures 2 and 2 of the drawings with free rotating rollers 31 to facilitate rolling of the wheels F, R of the car C with low friction.

A car loading operation with the above described system 100 is explained below with reference to figures of the drawings according to the present method.

A car C leaving the car factory onto a transport conveyor 70, with its hand brake on, is transferred to the conveyor surface 21 of a driving platform 20. When the car C is with its four wheels F, R placed onto the conveyor surface 21 of the driving platform 20, the driving platform 20 is then actuated so as to rotate around vertical axis A and raised up along direction Y as necessary. This is carried out until the conveyor surface 21 reaches a suitable position such that the car C is properly directed towards a given level 11, 12 of the transfer platform 30.

Once the car C, that has been already transferred from the transport conveyor 70 of the car factory to the conveyor surface 21 of the driving platform 20, is properly oriented facing a front edge of the transfer platform 30, the conveyor surface 21 of the driving platform 20 is driven so as to cause the car C to advance such that the front wheels F roll on the rollers 31 of the transfer platform 30. This is carried out until the front wheels F of the car C are properly positioned on the transport platform 10 in correspondence with a first pair of driving carriages TA, TB.

The electric motor 85 in the driving carriages TA, TB is then actuated to drive the arm folding portions 61 and thus the corresponding arm clamping portions 60 of the respective arms S1, S2 in each driving carriage TA, TB causing them to be moved angularly in a horizontal plane away from each other. This results in that the front wheels F of the car C can be arranged between the arms S1, S2. Afterwards, both arms S1, S2 in each driving carriage TA, TB are driven to move angularly towards each other so as to clamp the front wheels F of the car C therebetween. The rollers 60 arranged in the arms S1, S2 allow the front wheels F of the car C to be placed thereon as the arms S1, S2 approach each other. This results in that the front wheels F o the car C are raised along vertical direction Z a given height from the transport platform 10.

The first pair of driving carriages TA, TB are then driven so as to be displaced in a guided manner along direction Y in the transport platform 10. The car C is thus towed by its front wheels F a suitable travelling distance along the transport platform 10. Said travelling distance can be set by means of a suitable sensor such as a RFID card (not shown) fitted in the car C that is being handled. The travelling distance may be equivalent to that between the front wheels F and rear wheels R of the car C.

The first pair of driving carriages TA, TB are stopped after said travelling distance has been travelled as detected by the sensor such that the rear wheels R of the car C are positioned in correspondence with a second pair of driving carriages TA, TB.

As with the first pair of driving carriages TA, TB, once the car C is positioned with its rear wheels R in correspondence with the second pair of driving carriages TA, TB, the corresponding electric motor 85 is actuated to drive the arm folding portions 61 and thus the corresponding arm clamping portions 60 of the respective arms S1, S2 in said driving carriages TA, TB causing them to be moved angularly in a horizontal plane away from each other to allow the rear wheels F of the car C to be arranged between the arms S1, S2. The arms S1, S2 in each driving carriage TA, TB are then driven to move angularly towards each other so as to clamp the rear wheels F of the car C therebetween. Again, rollers 60 in the arms S1, S2 allow the rear wheels F of the car C to be placed thereon as the arms S1, S2 approach each other. As a result, the rear wheels F of the car C are raised from the transport platform 10 along vertical direction Z.

With the car C raised from the transport platform by its four wheels F, R through the arms S1, S2 of the two pairs of driving carriages TA, TB, the driving carriages TA, TB are driven along the transport platform 10 to displace the car C along direction Y to a desired position.

When the car C has been properly loaded in the transport platform 10, the driving carriages TA, TB can be driven again back to another desired position for receiving the wheels F; R of another car C for loading into the transport platform 10 of the railway train wagon.

Other steps for driving the driving carriages TA, TB into different positions for receiving the wheels F; R of cars C may be carried out for example for advancing cars C between adjacent transport platforms 10.

The above description can be applied both for loading and unloading the cars C in the transport platform 10 of the railway train wagon.

In order to operate the system properly, control means (not shown) are provided capable of operating the system 100 in a fully automated manner if required. Said control means in the example herein described are arranged such that the system may be properly controlled remotely by an operator. The control means are configured to sync the movements of the parts of the system 100 such as the driving carriages TA, TB and the driving platform 20. Also in this specific, non-limiting example, the control means are configured such that cars C in the upper level 12 of the transport platform 10 are prevented from being moved above cars C in the lower level 11 of the transport platform 10. The control means in the system 100 described herein are configured for providing traceability of each car C.

The method that has been described using the above system 100 allows greater efficiency and effectiveness in operation of transport and production lines to be obtained. The configuration and operation of the driving carriages TA, TB allow immediate loading of the cars C in the transport platform 10, that is, in the railway train. This has been found to result in reduced loading times and unloading times and consequently improvements in productivity, as well as logistical efficiency and planning (priority management).

Although only a number of particular embodiments and examples of the present system and method for loading and unloading vehicles in transport platforms have been disclosed herein, it will be understood by those skilled in the art that other alternative examples and/or uses and obvious modifications and equivalents thereof are possible. The present disclosure thus covers all possible combinations of the particular examples described.

Reference signs related to drawings and placed in parentheses in a claim are solely for attempting to increase the intelligibility of the claim, and shall not be construed as limiting the scope of the claim.

Thus, the scope of the present disclosure should not be limited by particular examples, but should be determined only by a fair reading of the claims that follow.

## Claims

1. A system (100) for loading and unloading vehicles (C) in transport platforms (10), the system (100) comprising at least one a transport platform (10), at least one pair of driving carriages (TA, TB), each pair comprising two respective driving carriages (TA, TB) arranged opposite each other in the transport platform (10), each pair of driving carriages (TA, TB) being associated with wheels (F; R) of a vehicle (C), each driving carriage (TA, TB) including clamping mechanisms (S1, S2) configured to removably clamp a vehicle wheel (F; R) and raise it relative to the transport platform (10), and driving means for moving the driving carriages (TA, TB) along the transport platform (10) for displacing the vehicle (C) to a desired position.

2. The system (100) of claim 1, wherein it comprises as may pairs of driving carriages (TA, TB) as vehicle axles.

3. The system (100) of claim 1 or 2, wherein it further comprises at least one driving platform (20) having a conveyor surface (21) adapted for receiving a vehicle (C) thereon and causing it to advance into the transport platform (10).

4. The system (100) of any of the preceding claims, wherein the driving platform (20) is adapted to be raised and/or rotated.

5. The system (100) of any of the preceding claims, wherein the clamping mechanisms comprise pairs of moving arms (S1, S2) configured to removably clamp a vehicle wheel (F; R) therebetween.

6. The system (100) of any of the preceding claims, wherein the clamping mechanisms (S1, S2) include rollers (60) that can be freely rotated around their longitudinal axis.

7. The system (100) of any of the preceding claims, wherein the clamping mechanisms (S1, S2) are configured to be moved towards to and/or away from each other for clamping and/or releasing the vehicle wheel (F; R).

8. The system (100) of any of the preceding claims, wherein the clamping mechanisms (S1, S2) are configured to be moved upwards and downwards for raising and lowering the vehicle (C) relative to the transport platform (10).

9. The system (100) of any of the preceding claims, wherein it further comprises at least one transfer platform (30) provided with rollers (31), the transfer platform (30) being intended to be arranged in coincidence with at least one driving platform (20).

10. The system (100) of any of the preceding claims, wherein it further comprises at least one transfer platform (30) provided with rollers (31), the transfer platform (30) being intended to be arranged between a transport platform (10) and a driving platform (20).

11. A method for loading and unloading vehicles (C) in transport platforms (10), the method comprising:
- advancing a vehicle (C) into a transport platform (10) of a system (100) of any of the preceding claims until the wheels (F; R) of a first vehicle axle are positioned in correspondence with a first pair of driving carriages (TA, TB);
- driving the driving carriages (TA, TB) to clamp the wheels (F; R) of the first vehicle axle;
- driving the first pair of driving carriages (TA, TB) for raising the wheels (F; R) of the first vehicle axle;
- driving the first pair of driving carriages (TA, TB) for displacing them along the transport platform (10);
- stopping the first pair of driving carriages (TA, TB) until the wheels (F; R) of a second vehicle axle are in correspondence with a second pair of driving carriages (TA, TB);
- driving the driving carriages (TA, TB) to clamp the wheels (F; R) of the second vehicle axle;
- driving the second pair of driving carriages (TA, TB) for raising the wheels (F; R) of the second vehicle axle;
- driving at least one of the first or second pairs of driving carriages (TA, TB) for displacing them according to a guided displacement along the transport platform (10) for displacing the vehicle (C) to a desired position.

12. The method of claim 11, wherein the step of clamping the wheels (F; R) of the vehicle (C) is carried out by driving clamping mechanisms (S1, S2) of the driving carriages (TA, TB).

13. The method of claim 12, wherein it comprises driving the driving carriages (TA, TB) again into a position for receiving the wheels (F; R) of another vehicle (C) to be loaded in the transport platform (10).

14. The method of claim 12 or 13, wherein it comprises providing a driving platform (20) substantially at the same level as the transport platform (10), the driving platform (20) including a moving surface (21) adapted for receiving a vehicle (C) hereon and causing it to advance into the transport platform (10).

15. The method of claim any of the claims 12-14, wherein it comprises advancing the vehicle (C) onto a transfer platform (30) provided with rollers (31) arranged between the transport platform (10) and the driving platform (20).
